# EUROPEAN PATENT APPLICATION

(11) **EP 4 696 487 A1**
(43) Date of publication of application: **18.02.2026**
(21) Application number: 24306353.4
(22) Date of filing: 13.08.2024
(51) Int. Cl.: B29D 11/00

(54) **A SEPARATOR DEVICE ADAPTED TO BE POSITIONED BETWEEN TWO OPHTHALMIC LENSES**

(71) Applicant: Essilor International, 94220 Charenton-Le-Pont (FR)
(72) Inventor: BRUNET, Thierry, 21220 GEVREY CHAMBERTIN (FR); MONVOISIN, Antoine, 21110 BEIRE LE FORT (FR); TRIDON, Jean-Marc, 21560 COUTERNON (FR)
(74) Representative: Ipsilon

(57) **Abstract**

This separator device (10) adapted to be positioned between two ophthalmic lenses comprises a housing having a top plate (12) and a bottom plate (14) parallel to the top plate (12). The top plate (12) has at least three circular apertures (16) and the bottom plate (14) has the same number of circular apertures (16) as the top plate (12) and at the same locations. The separator device (10) further comprises, at each of these locations, a ball (18) accommodated between the top and bottom plates (12, 14) in a pair of the apertures, the diameter of each aperture (16) being smaller than the diameter of each ball (18), each ball (18) protruding from the top and bottom plates (12, 14) through the apertures (16) and being able to rotate freely in the apertures (16) thanks to a predetermined clearance between each ball (18) and the edge of the apertures (16) accommodating the ball (18).

## Description

### FIELD OF THE INVENTION

The present invention relates to a separator device adapted to be positioned between two ophthalmic lenses.

### BACKGROUND OF THE INVENTION

For various applications, such as gluing a prescription on an electrochromic lens, or manufacturing a hybrid organic-mineral lens, it is necessary to accurately position an ophthalmic lens with respect to another one.

Due to the perfect surface matching between the two lenses after a contact tip and tilt process that is well known in the art, there is a high probability to create a suction effect between the two lenses, which may lead to an impossibility to separate the two lenses, or to translate one of the lenses.

Lens holding devices are known, which comprise vacuum cups for gripping the lenses. Nevertheless, the suction effect of such vacuum cups is not sufficient for compensating the undesired surface adhesion between the two lenses.

### SUMMARY OF THE INVENTION

An object of the present disclosure is to overcome the above-mentioned drawbacks of the prior art.

To that end, the present disclosure provides a separator device adapted to be positioned between two ophthalmic lenses, remarkable in that it comprises a housing having a top plate and a bottom plate parallel to the top plate, he top plate having at least three circular apertures and the bottom plate having the same number of circular apertures as the top plate and at the same locations, the separator device further comprising, at each of these locations, a ball accommodated between the top and bottom plates in a pair of the apertures, the diameter of each aperture being smaller than the diameter of each ball, each ball protruding from the top and bottom plates through the apertures and being able to rotate freely in the apertures thanks to a predetermined clearance between each ball and the edge of the apertures accommodating the ball.

Thus, the presence of a limited number of contact points between the separator service and the faces of the ophthalmic lenses to position with respect to each other, the surface adhesion effect is cancelled.

In an embodiment, the ball has a diameter of 5 mm ± 0.7 µm.

In an embodiment, the ball is made of stainless steel.

In an embodiment, the top and bottom plates are assembled with each other by screwing.

In an embodiment, the top plate has at least one cut-out and the bottom plate has the same number of cut-outs at the same locations as the top plate, the cut-outs being adapted to gripping of the separator device.

In an embodiment, the separator device comprises three balls distributed on a circle at regular intervals.

To the same end as mentioned above, the present disclosure also provides an assembly comprising two ophthalmic lenses, a device for manipulating these two ophthalmic lenses and a separator device as succinctly described above arranged between these two ophthalmic lenses, remarkable in that the manipulating device comprises a plurality of holders movable in translation according to a direction orthogonal to a face of the two ophthalmic lenses, at least one holder of the plurality of holders being provided with a vacuum propagating element enabling the at least one holder to grip that face of one of the two ophthalmic lenses at a predetermined gripping location, the assembly being further remarkable in that the number of the balls equals the number of the holders and the location of the balls on the top and bottom plates corresponds to the gripping location of the at least one holder.

The matching between the gripping locations and the locations of the balls makes it possible to avoid the risk of lens warpage due to the weight of the holders.

In an embodiment, the manipulating device comprises five holders and five balls, the gripping locations of four of the five holders being on a first circle, the gripping location of the fifth holder being at the center of the first circle, four of the five balls being located on a second circle having the same diameter as the first circle and the fifth ball being located at the center of the second circle, the centers of the first and second circles being aligned along the above-mentioned direction orthogonal to the above-mentioned face of the two ophthalmic lenses.

As particular features and advantages of the assembly are similar to those of the separator device, they are not repeated here.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1 is a schematic view of a separator device according to the present disclosure, in a particular embodiment.
FIG. 2 is a schematic view of a separator device according to the present disclosure, in another particular embodiment.
FIG. 3 is a schematic view of a separator device according to the present disclosure positioned between two ophthalmic lenses, in a particular embodiment.
FIGS. 4 and 5 are schematic partial views of an assembly according to the present disclosure, in a particular embodiment and in a position where the separator device is in contact with the two ophthalmic lenses.
FIG. 6 is schematic partial view of an assembly according to the present disclosure, in the embodiment of Figures 4 and 5 and in a position where the separator device is not in contact with one of the ophthalmic lenses.

### DETAILED DESCRIPTION OF EMBODIMENTS

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

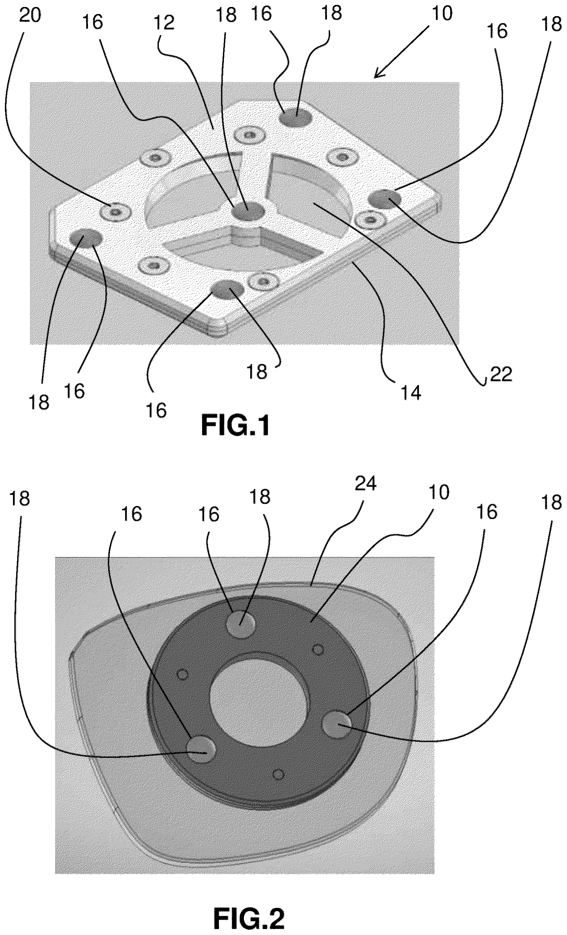

Figure 1 shows a particular embodiment of a separator device 10 according to the present disclosure.

The separator device 10 comprises a housing having a top plate 12 and a bottom plate 14 parallel to the top plate 12.

The top plate 12 and the bottom plate 14 are assembled with each other for example by screwing. As shown in Figure 1, a plurality of screws 20 may be used for that purpose.

The top plate 12 has at least three circular apertures 16. The bottom plate 14 has the same number of apertures 16 as the top plate 12 and at the same locations. In the particular embodiment of Figure 1, the top plate 12 and the bottom plate 14 have five apertures 16, four of which are located on a circle and the fifth one of which is located at the center of the circle.

At each of the locations of the apertures 16, the separator device 10 comprises a ball 18 accommodated between the top and bottom plates 12, 14, in a pair of apertures 16 consisting of an aperture 16 in the top plate 12 and of the corresponding aperture 16 in the bottom plate 14.

Advantageously, all the apertures 16 may be identical and all the balls 18 may be identical.

The diameter of each aperture 16 is smaller than the diameter of each ball 18.

By way of non-limiting example, the balls 18 may have a diameter of 5 mm ± 0.7 µm.

The balls 18 may be made of stainless steel.

Each ball 18 protrudes from the top plate 12 and from the bottom plate 14 through the pair of apertures 16 which accommodate the ball 18.

Each ball 18 is able to rotate freely in the pair of apertures 16 which accommodate the ball 18, thanks to a predetermined clearance between each ball 18 and the edge of the apertures 18 accommodating the ball 18.

Advantageously, as shown in Figure 1, the top plate 12 may have at least one cut-out 22 and the bottom plate 14 has in this case the same number of cut-outs 22 at the same locations as the top plate 12. The cut-outs are adapted to gripping of the separator device 10, either manually by an operator, or automatically by a robotized arm.

In the particular embodiment of Figure 1, the separator device 10 has three cut-outs in the form of angular sectors.

Figure 2 shows another particular embodiment of a separator device 10, positioned on an ophthalmic lens 24.

In the embodiment of Figure 2, the separator device 10 has an annular shape and each of the top and bottom plates 12, 14 has three circular apertures 16 which accommodate three balls 18, respectively. Advantageously, the three balls 18 are distributed on a circle at regular intervals.

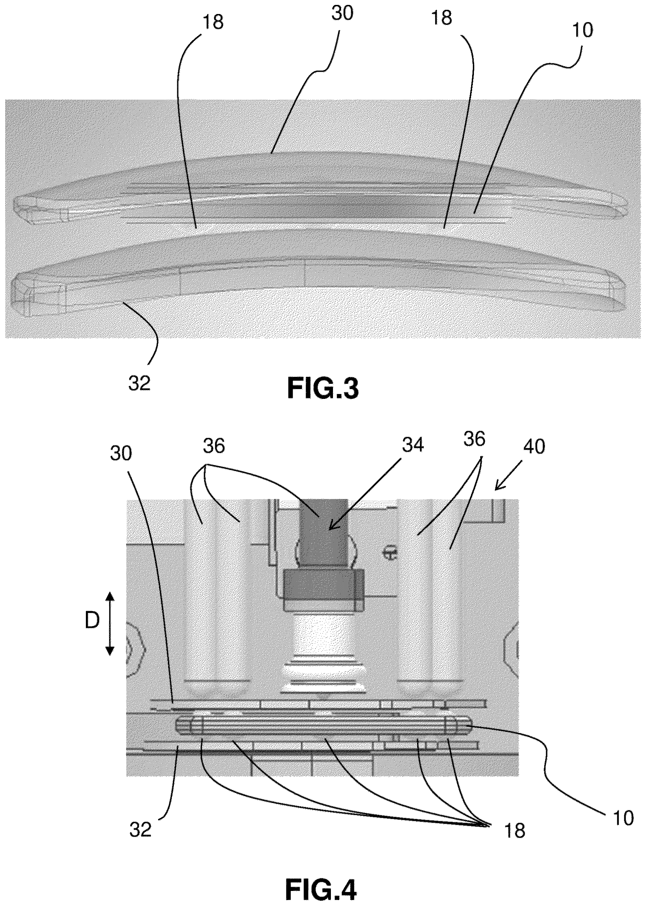

Figure 3 shows that the separator device 10 is adapted to be positioned between two ophthalmic lenses 30, 32. Each ball 18 has a first contact point with the rear face of the ophthalmic lens 30 and a second contact point with the front face of the ophthalmic lens 32.

Figure 4 shows a particular embodiment of an assembly 40 according to the present disclosure. The assembly 40 comprises two ophthalmic lenses 30, 32, a device 34 for manipulating the two ophthalmic lenses 30, 32 and a separator device 10 as described above.

The manipulating device 34 comprises a plurality of holders 36 movable in translation according to a direction D orthogonal to a face of the two ophthalmic lenses 30, 32.

At least one holder 36 is provided with a vacuum propagating element enabling that holder 36 to grip the above-mentioned face of one of the ophthalmic lenses 30 at a predetermined gripping location.

In the particular embodiment of Figure 4, the plurality of holders 36 comprises one holder adapted to grip the geometrical center of the above-mentioned face of the lens 30 and four holders adapted to grip the periphery of that face of the lens 30.

It should be noted that, in case there is only one holder 36, it is not necessarily positioned at the exact geometrical center of the face of the lens 30, but may be close thereto.

In the particular embodiment of Figures 4, 5 and 6, the holder 36 is a tubular rod having an end adapted to contact the above-mentioned face of the lens 30.

By way of non-limiting example, the end of the tubular rod may be hemispherical as in the illustrated embodiment.

In the illustrated embodiment, the vacuum propagating element of the holder 36 comprises a central longitudinal hole and at least one radial hole communicating with the central longitudinal hole, the holes being provided for enabling connection to a vacuum source (not shown).

According to the present disclosure, the number of balls 18 equals the number of holders 36 and the location of the balls 18 on the top and bottom plates 12, 14 corresponds to the gripping location of the holder(s) 36.

In the particular embodiment of Figures 4, 5 and 6, the manipulating device 34 comprises five holders 36 and five balls 18, the gripping locations of four of the five holders 36 are on a first circle, the gripping location of the fifth holder 36 is at the center of the first circle, four of the five balls 18 are located on a second circle having the same diameter as the first circle and the fifth ball 18 is located at the center of the second circle. The centers of the first and second circles are aligned along the direction D.

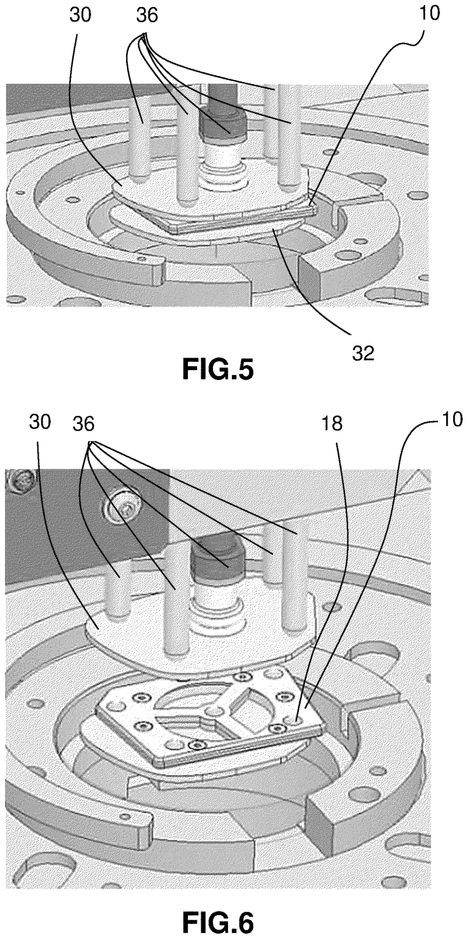

In Figures 4 and 5, the assembly 40 is shown in a position where the separator device 10 is in contact, via the balls 18, with a face of the ophthalmic lens 30 and with a face of the ophthalmic lens 32.

In Figure 6, the assembly 40 is shown in a position where the holders 36 have gripped the ophthalmic lens 30 and have translated the ophthalmic lens 30 along the direction D, so that the ophthalmic lens 30 is held above the separator device 10 and at a predetermined distance thereof.

The separator device 10 and the assembly 40 are adapted to any lens spherical curvature i.e. to any concave or convex lenses.

The assembly may be equipped with electric motors controlling translation of the holders 36, in order to minimize height variations during positioning of the holders 36 with respect to the ophthalmic lenses 30, 32.

The balls 18 are advantageously calibrated, in order to enable a perfect positioning of the ophthalmic lenses 30, 32 with respect to each other in view of a bonding step.

Although representative methods and devices have been described in detail herein, those skilled in the art will recognize that various substitutions and modifications may be made without departing from the scope of what is described and defined by the appended claims.

## Claims

1. A separator device (10) adapted to be positioned between two ophthalmic lenses, **characterized in that** it comprises a housing having a top plate (12) and a bottom plate (14) parallel to said top plate (12), said top plate (12) having at least three circular apertures (16) and said bottom plate (14) having the same number of circular apertures (16) as said top plate (12) and at the same locations, said separator device (10) further comprising, at each of said locations, a ball (18) accommodated between said top and bottom plates in a pair of said apertures (16), the diameter of each aperture (16) being smaller than the diameter of each ball (18), each ball (18) protruding from the top and bottom plates (12, 14) through said apertures (16) and being able to rotate freely in said apertures (16) thanks to a predetermined clearance between each ball (18) and the edge of the apertures (16) accommodating the ball (18).

2. The separator device (10) according to claim 1, **characterized in that** said ball (18) has a diameter of 5 mm ± 0.7 µm.

3. The separator device(1 0) according to claim 1 or 2, **characterized in that** said ball (18) is made of stainless steel.

4. The separator device (10) according to claim 1, 2 or 3, **characterized in that** the top and bottom plates (12, 14) are assembled with each other by screwing.

5. The separator device (10) according to any of the preceding claims, **characterized in that** said top plate (12) has at least one cut-out (22) and said bottom plate (14) has the same number of cut-outs (22) at the same locations as said top plate (12), said cut-outs (22) being adapted to gripping of said separator device (10).

6. The separator device (10) according to any of the preceding claims, **characterized in that** it comprises three balls (18) distributed on a circle at regular intervals.

7. An assembly (40) comprising two ophthalmic lenses (30, 32), a device (34) for manipulating said two ophthalmic lenses and a separator device (10) according to any of the preceding claims arranged between said two ophthalmic lenses (30, 32), **characterized in that** said manipulating device (34) comprises a plurality of holders (36) movable in translation according to a direction (D) orthogonal to a face of said two ophthalmic lenses (30, 32), at least one holder of said plurality of holders (36) being provided with a vacuum propagating element enabling said at least one holder (36) to grip said face of one of said two ophthalmic lenses (30) at a predetermined gripping location, said assembly (40) being further **characterized in that** the number of said balls (18) equals the number of said holders (36) and the location of said balls (18) on the top and bottom plates (12, 14) corresponds to the gripping location of said at least one holder (36).

8. The assembly (40) according to claim 7, **characterized in that** said manipulating device (34) comprises five holders (36) and five balls (18), the gripping locations of four of said five holders (36) being on a first circle, the gripping location of the fifth holder (36) being at the center of said first circle, four of said five balls (18) being located on a second circle having the same diameter as said first circle and the fifth ball (18) being located at the center of said second circle, the centers of the first and second circles being aligned along said direction orthogonal to said face of said two ophthalmic lenses (30, 32).
